# EUROPEAN PATENT APPLICATION

(11) **EP 4 002 106 A1**
(43) Date of publication of application: **25.05.2022**
(21) Application number: 21771978.0
(22) Date of filing: 24.02.2021
(51) Int. Cl.: G06F 9/34, G06F 9/345, G06F 9/355, G06F 9/38, G06F 12/0853, G06F 12/0875

(54) **INFORMATION PROCESSING DEVICE AND INFORMATION PROCESSING METHOD**

(30) Priority: 18.03.2020 JP 2020047488
(71) Applicant: NEC Corporation, 108-8001 Tokyo (JP)
(72) Inventor: KOBAYASHI Yoshiki, Tokyo 108-8001 (JP)
(74) Representative: Vossius & Partner Patentanwälte Rechtsanwälte mbB
(86) International application number: PCT/JP2021/006864
(87) International publication number: WO 2021/187027

(57) **Abstract**

An information processing device includes: a storage device including a plurality of banks which are storage regions for which independent reading/writing is possible and a processing device capable of accessing the plurality of banks in parallel, wherein the processing device includes a generation means for generating, in units of loops in a loop control statement, a packet having an address in an index array and vector data elements stored therein, and each of the plurality of banks atomically and simultaneously carries out a series of processes for carrying out reading, computation processing, and storage of a computation result value for data corresponding to a relevant address in units of packets.

## Description

### TECHNICAL FIELD

The present invention relates to an information processing device and an information processing method.

### BACKGROUND ART

Patent Document 1 discloses a technique in which mask information associated with vector data is received, data elements obtained from a storage location corresponding to each address of a plurality of addresses as indicated by the mask information are loaded, and vector instructions which enable efficient synchronization and reduction in arithmetic operations are provided when a processor having the logic to reserve these storage locations for subsequent operations carries out an atomic single-instruction multiple data (SIMD) operation.

### [Prior Art Documents]

### [Patent Document]

[Patent Document 1]
Japanese Unexamined Patent Application, First Publication No. 2014-099194

### SUMMARY OF INVENTION

### Technical Problem

A summation arithmetic operation which includes the following indirect address reference is referred to as a list summation arithmetic operation:
DO 1=1, N
X(L(I))=X(L(I))+Y(I)
ENDDO.

The list summation arithmetic operation may not be possible due to the duplication of an indirect reference address L(I) in a device which includes a vector computation processing mechanism in some cases. In this case, a vector processing unit cannot carry out vector processing and needs to carry out processing using a large number of scalar processing and memory accesses.

An example object of the present invention is to provide an information processing device and an information processing method capable of solving the above-described problems.

### Solution to Problem

An information processing device according to an example aspect of the present invention includes: a storage device including a plurality of banks which are storage regions for which independent reading/writing is possible; and a processing device capable of accessing the plurality of banks in parallel, wherein the processing device includes a generation means for generating, in units of loops in a loop control statement, a packet having an address in an index array and vector data elements stored therein, and each of the plurality of banks atomically and simultaneously carries out a series of processes for carrying out reading, computation processing, and storage of a computation result value for data corresponding to a relevant address in units of packets.

An information processing method according to an example aspect of the present invention is an information processing method carried out using an information processing device which includes a storage device including a plurality of banks which are storage regions for which independent reading/writing is possible; and a processing device capable of accessing the plurality of banks in parallel including: a step of generating, in units of loops in a loop control statement, a packet having an address in an index array and vector data elements stored therein, and a step of atomically and simultaneously carrying out, in each of the plurality of banks, a series of processes for carrying out reading, computation processing, and storage of a computation result value for data corresponding to a relevant address in units of packets.

### Advantageous Effects of Invention

According to at least one of the above example embodiments, it is possible to reduce memory access and the number of instruction issuances relating to computation processing of a list vector including an indirect reference having a duplicate value.

### BRIEF DESCRIPTION OF DRAWINGS

Fig. 1 is a diagram showing a constitution of an information processing device according to an example embodiment.
Fig. 2 is a diagram showing an example of a loop control statement according to the example embodiment.
Fig. 3 is a flowchart for describing an operation of the information processing device according to the example embodiment.
Fig. 4 is a diagram showing a constitution of the information processing device relating to a basic constitution.

### EXAMPLE EMBODIMENTS

### (First example embodiment)

### ((Constitution of information processing device))

Eexample embodiments will be described in detail below with reference to the drawings.

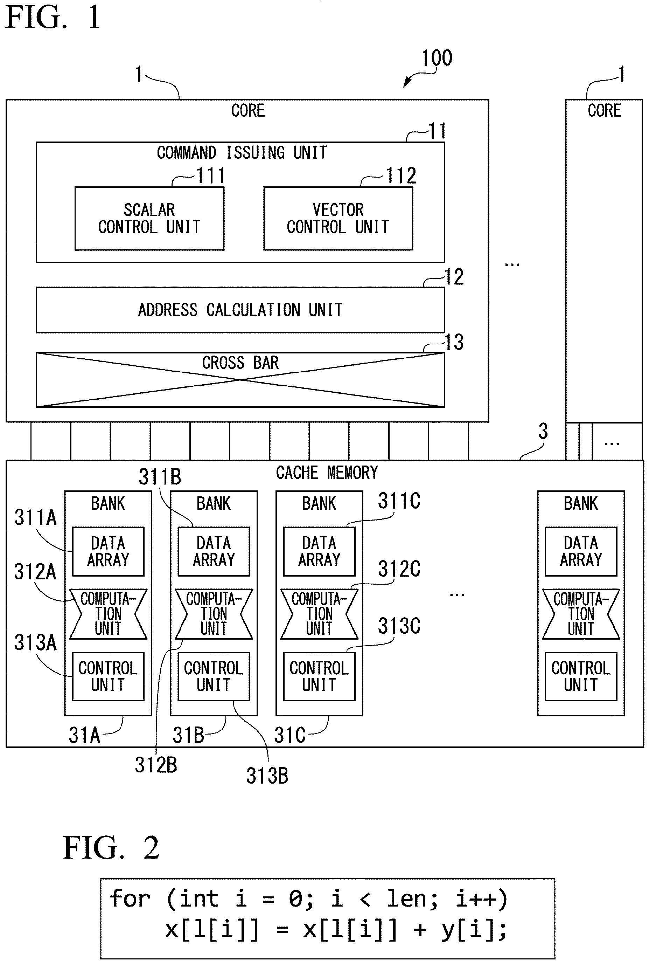

Fig. 1 is a diagram showing a constitution of an information processing device 100 according to a first example embodiment.

The information processing device 100 according to the first example embodiment is a device which issues a list vector add (LVA) instruction to a vector register having data that is a computation processing target stored therein and atomically processes the data that is a computation processing target in a cache memory 3 (an example of a memory). The atomic processing is treated as maintaining atomicity, that is, either completing or not carrying out any of the processes defined as a series of processes and means that, when the process is completed, a series of processes is carried out at the moment at which the process is completed.

The information processing device 100 carries out vector computation processing. The information processing device 100 carries out computation processing relating to the loop control statement using a computation unit 312 of the cache memory 3 when a loop control statement is included in the computation processing target.

The information processing device 100 includes cores 1 and the cache memory 3. The core 1 is an example of a processing device (an example of a processor). The cache memory 3 is an example of a storage device.

### ((Constitution of core))

A constitution of the cores 1 will be described below.

The core 1 is a device which is provided in a central processing unit (CPU) and carries out computation processing. The information processing device 100 shown in Fig. 1 is a multi-core calculator including a plurality of cores 1. For example, the information processing device 100 may be a single-core calculator including one core 1, a dual-core calculator including two cores 1, or a quad-core calculator including four cores 1.

Each of the cores 1 includes a command issuing unit 11, an address calculation unit 12, and a cross bar 13.

The command issuing unit 11 reads (fetches) a source program from a main storage device (not shown) connected to the core 1 and carries out processing such as decoding, instruction issuance, and computation processing.

The command issuing unit 11 includes a scalar control unit 111 and a vector control unit 112.

In the loop control statement as shown in Fig. 2, a vector x composed of a loop including an indirect reference is referred to as a first vector. A vector composed of an indirect reference is an array whose subscript is designated by another array. Furthermore, in the loop control statement as shown in Fig. 2, a vector y which does not include an indirect reference is referred to as a second vector. In addition, in the loop control statement as shown in Fig. 2, a vector 1 indicating an indirect reference address is an example of an index array.

The scalar control unit 111 issues an instruction for reading first vector data and second vector data that are computation processing targets from the main storage device (not shown) connected to the core 1 to the vector control unit before executing an LVA instruction.

The vector control unit 112 executes the VLD instruction (vector load) for obtaining the first vector data and the second vector data. The vector control unit 112 executes the VLD instruction to obtain a value of the first vector data and a value of the second vector data from the main storage device having the first vector data and the second vector data stored therein and develops each of the values in separate vector registers.

The vector control unit 112 receives the LVA instruction issued by the scalar control unit 111 and starts processing the LVA instruction based on the vector data stored in the vector register used in the LVA instruction.

The vector control unit 112 transmits the vector data stored in the vector register relating to the LVA instruction to the address calculation unit 12. The vector data stored in the vector register relating to the LVA instruction is the value of the first vector data and the value of the second vector data shown in Fig. 2.

The value of the first vector data and the value of the second vector data are stored in the vector register in advance before the computation processing of the loop control statement.

For example, the information processing device 100 stores the value of the first vector data and the value of the second vector data in the vector register through the following operations.

The address calculation unit 12 receives the value of the first vector data and the value of the second vector data from the vector control unit 112 and converts the value of the first vector data into a physical address. Furthermore, the address calculation unit 12 generates, in units of loops in the loop control statement, a packet for storing the converted physical address of the first vector data, a first element, and a second element and transmits the packet to the cross bar 13. At this time, when the first element pointing to the same address is transmitted as a packet in the order of the elements, the order is guaranteed even if they are duplicated. The address calculation unit 12 is an example of a generation means. The first element is a first vector data element. The second element is a second vector data element.

The cross bar 13 receives the packet transmitted by the address calculation unit 12 and simultaneously transmits each packet to a corresponding bank 31 of the cache memory 3 based on the address included in the packet. The cross bar 13 is an example of a transmission means.

For example, the cross bar 13 compares bank information that is information obtained by associating the address set in advance with the bank 31 with the address included in the packet transmitted by the address calculation unit 12, carries out checking, and identifies the bank 31 associated with the address. Furthermore, the cross bar 13 transmits a packet to the identified bank 31.

In the bank information, each address is associated with a different bank. That is to say, if the address is different, the bank 31 transmitted using the cross bar 13 is different.

Also, the cross bar 13 is set not to simultaneously transmit packets relating to the same address. That is to say, the cross bar 13 does not simultaneously transmit a plurality of packets to the same bank 31. For example, the cross bar 13 does not simultaneously transmit a plurality of packets relating to duplicate addresses. The cross bar 13 stores duplicate addresses in a buffer (not shown) included in the information processing device 100 and transmits packets relating to the address one by one at a fixed timing. When there are three duplicate packets at the identified address, the cross bar 13 transmits a packet three times for a identified bank 31 corresponding to the address. Even when there are packets relating to duplicate addresses, the cross bar 13 transmits the packets one by one. Thus, the bank 31 can carry out computation processing atomically.

In addition, in the information processing device 100 in the first example embodiment, the cores 1 and the cache memory 3 are connected in a wired manner through an output port. That is to say, when the cross bar 13 transmits a packet to the output port corresponding to the identified bank 31, the packet is transmitted to the bank 31 corresponding to the packet.

Although a line connected between the core 1 and the cache memory 3 is a network between the core 1 and the cache memory 3 in Fig. 1, the present invention is not limited to this connection form.

### ((Constitution of cache memory))

A constitution of the cache memory 3 will be described below.

The cache memory 3 is a high-speed small-capacity memory used for hiding the delay of the main storage device when the CPU which includes the core 1 obtains information and for carrying out filling with a performance difference between the CPU and the main storage device. The cache memory 3 is a shared memory which allows accessing from a plurality of cores 1 included in the information processing device 100.

As shown in Fig. 1, the cache memory 3 includes a plurality of banks 31A, 31B, 31C, and .... When the banks 31A, 31B, 31C, and ... are not distinguished from each other, they are referred to as a bank 31. The plurality of cores 1 included in the information processing device 100 can access the cache memory 3 all at once and the cache memory 3 can be accessed simultaneously by the number of banks 31 included in the cache memory 3. The bank 31 is a storage region for which independent reading/writing is possible. The core 1 can access a plurality of banks in parallel.

The bank 31 includes data arrays 311A, 311B, 311C, and ..., computation units 312A, 312B, 312C, and ..., control units 313A, 313B, 313C, and .... When the data arrays 311A, 311B, 311C, and ... are not distinguished from each other, they are referred to as a data array 311. Furthermore, when the computation units 312A, 312B, 312C, and ... are not distinguished from each other, they are referred to as a computation unit 312. In addition, when the control units 313A, 313B, 313C, and ... are not distinguished from each other, they are referred to as a control unit 313. In each of the plurality of banks 31 included in the cache memory 3, the reading of the data array 311 using the control unit 313, the computation processing using the computation unit 312, and the storage of the data array 311 using the control unit 313 are carried out atomically as an example process.

The control unit 313 is provided in each bank 31 of the cache memory 3, accesses the data array 311 based on the address, and reads data corresponding to the address from the cache line of the data array 311. Furthermore, the control unit 313 stores a value obtained by adding the read data corresponding to the first element and the second element in the cache line of the data array 311 based on the same address again.

The computation unit 312 is provided in each bank 31 of the cache memory 3, receives the packet transmitted from the cross bar 13 of the core 1, and carries out the computation processing in units of packets.

The detailed operation of the computation unit 312 will be described later.

### ((Operation of information processing device))

An operation of the information processing device 100 will be described below.

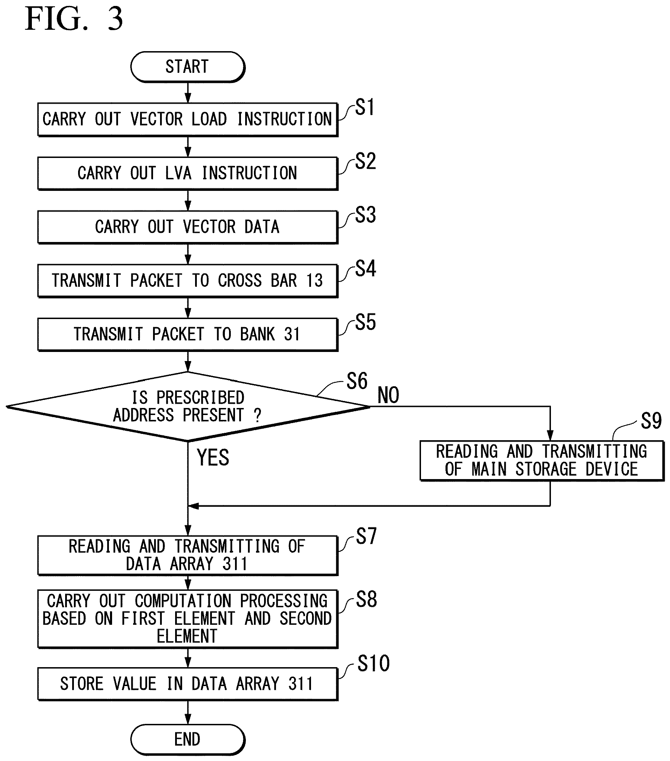

Fig. 3 is a flowchart for describing the operation of the information processing device 100.

The information processing device 100 carries out a vector load instruction (VLD instruction) for obtaining a value of the first vector data and a value of the second vector data (Step S1). Thus, the information processing device 100 stores the value of the first vector data and the value of the second vector data in the vector register. The scalar control unit 111 reads an LVA instruction from the main storage device and transmits the read LVA instruction to the vector control unit 112.

The vector control unit 112 receives the LVA instruction transmitted in Step S1 and carries out the LVA instruction (Step S2).

The vector control unit 112 transmits the vector data stored in the vector register relating to the LVA instruction to the address calculation unit 12 (Step S3). The vector data stored in the vector register relating to the LVA instruction described above is the value of the first vector data and the value of the second vector data relating to a vector load in Step S1.

The address calculation unit 12 receives the value of the first vector data and the value of the second vector data in Step S3 and converts the value of the first vector data into a physical address. Furthermore, the address calculation unit 12 generates, in units of loops in the loop control statement, a packet having the converted physical address of the first vector data and the second vector data element stored therein and transmits the packet to the cross bar 13 (Step S4).

The cross bar 13 receives the packet in Step S4 and simultaneously transmits each packet to the corresponding bank 31 of the cache memory 3 based on the address included in the packet (Step S5).

The control unit 313 of each bank 31 determines whether the address is present in the data array 311 of the bank 31 based on the address included in the packet transmitted in Step S5 (Step S6). For example, the control unit 313 compares the address with data array information that is information obtained by associating the address with the data array 311, carries out checking, and determines whether the address is present in the data array 311.

When it is determined by the control unit 313 that the address of the packet transmitted in Step S5 is present in the data array 311 (Step S6: YES), accessing the data array 311 is carried out based on the address and the cache line including the first element indicated by the first vector data element is read. After that, the control unit 313 extracts the first element from the address of the packet from the read cache line and transmits the first element to the computation unit 312 together with the second vector data element, the second element (Step S7).

After Step S7, the computation unit 312 carries out computation processing based on the first element and the second element that are the values transmitted in Step S7 (Step S8). That is to say, the computation unit 312 carries out an addition process of the data corresponding to the address that is the first element and the second element.

On the other hand, when it is determined by the control unit 313 that the address of the packet transmitted in Step S8 is not present in the data array 311 (Step S6: NO), the control unit 313 accesses the main storage device based on the address and reads the data corresponding to the address (Step S9). The control unit 313 stores the data read from the main storage device in the cache line and determines the comparison and match of the addresses again. The control unit 313 reads the data corresponding to the address from the cache line. After that, the control unit 313 extracts the first element from the address of the packet from the read cache line and transmits the first element to the computation unit 312 together with the second element (Step S7).

After Step S9, the computation unit 312 carries out computation processing based on the value transmitted in Step S9 (Step S8). That is to say, the computation unit 312 carries out an addition process of the data corresponding to the address that is the first element and the second element.

The control unit 313 stores the value obtained through the computation processing in Step S8 in the data array 311 based on the address of the packet (Step S10).

While the data array 311 is read in Step S7 and the read value is stored in the data array 311 in Step S10, when other accessing to the data array 311 is an atomic operation which does not occur, that is, an operation which cannot be separated any further, the information processing device 100 can prevent an address that is a target of the LVA instruction from being rewritten due to a subsequent store or the like. When the example embodiment of the present invention is not limited to the specific example embodiment described above, it is obtained by carrying out computation processing atomically in a plurality of banks of the cache memory 3 that main memory access can be reduced and a speed of computation processing can increase even if a prescribed vector instruction or the like is not omitted.

Also, the cross bar 13 identifies the bank 31 based on the address and transmits a packet. Thus, when computation processing relating to the same address is carried out, the computation processing in the computation unit 312 of the same bank 31 and the storage in the data array 311 are carried out. Also in such a case, packets wait for in the buffer of the cache memory 3 relating to the same bank 31 and computation processing is sequentially carried out. When an information processing device having a constitution different from that of the example embodiment described above includes duplicate addresses, it is necessary for the scalar control unit to carry out memory access multiple times for the bank, carry out adding using the scalar control unit, and write the adding result to the bank. On the other hand, according to the information processing device 100 according to the first example embodiment, addition including duplicate addresses is completed with one LVA instruction. Moreover, the information processing device 100 according to the first example embodiment performs the addition closed in the bank 31 only a plurality of times, and the number of memory accesses from the core 1 can be reduced.

On the other hand, when each of the cores 1 transmits a packet relating to a unique address to each of the banks 31, the computation unit 312 of each of the banks 31 can carry out computation processing in parallel and can reduce memory access relating to computation processing.

Also, although the storage device in the example embodiment described above is the cache memory 3, the storage device may be the main memory.

Furthermore, although continuous execution is possible when the address calculation unit 12 guarantees a packet transmission order for duplicate addresses in the example embodiment described above, efficiency can also be improved by identifying a loop including duplicate addresses in advance using a compiler and issuing LVA instructions a plurality of times as many times as the number of duplicate addresses.

In addition, although the cache memory 3 in the example embodiment described above is connected to the core 1, the cache memory 3 may be provided in the core 1. That is to say, the storage device included in the information processing device 100 may be a cache memory included in the core 1.

### ((Action and effect))

The information processing device 100 according to the example embodiment of the present invention includes the storage device including the plurality of banks 31 that are storage regions for which independent reading/writing is possible and the processing device capable of accessing the plurality of banks in parallel. The processing device includes the generation means for generating, in units of loops in the loop control statement, the packet having the address in the index array and vector data elements stored therein. Each of the plurality of banks 31 atomically and simultaneously carries out the series of processes for carrying out reading, computation processing, and storage of the computation result value for the data corresponding to the relevant address in units of packets.

The information processing device 100 atomically carries out computation processing and storage in units of packets in the plurality of banks 31 of the storage device. Thus, a user of the information processing device 100 can reduce the memory access relating to the computation processing of the list vector including the indirect reference whose value is duplicated.

Moreover, the processing device of the information processing device 100 includes the transmission means for identifying the bank 31 which transmits the packet based on the address of the index array stored in the packet and transmitting the packet to the bank 31. The bank 31 receives the transmitted packet and carries out computation processing.

The information processing device 100 identifies a bank 31 which transmits a packet based on an address. The information processing device 100 carries out computation processing in units of packets in the identified bank 31. Thus, a user of the information processing device 100 can reduce the memory access relating to the computation processing of the vector including the indirect reference whose value is duplicated.

Also, the storage device of the information processing device 100 is connected to the processing device in a wired or wireless manner.

As a result, also in the information processing device 100 in which the processing device and the storage device are separated, a user of the information processing device 100 can reduce the memory access relating to the computation processing of the vector including the indirect reference whose value is duplicated.

Furthermore, the storage device of the information processing device 100 is provided inside the processing device.

As a result, even in the information processing device 100 in which the storage is provided inside the processing device, a user of the information processing device 100 can reduce the memory access relating to the computation processing of the vector including the indirect reference whose value is duplicated.

In addition, the storage device of the information processing device 100 is the cache memory 3.

As a result, a user of the information processing device 100 can reduce the memory access relating to the addition process of the vector including the indirect reference whose value is duplicated using the plurality of banks 31 of the cache memory 3.

An information processing method according to the example embodiment of the present invention includes a step of generating, in units of loops in a loop control statement, a packet having an address in an index array and vector data elements stored therein in an information processing device which includes a storage device including a plurality of banks 31 that are storage regions for which independent reading/writing is possible and a processing device capable of accessing the plurality of banks 31 in parallel, and a step of atomically and simultaneously carrying out a series of processes for carrying out reading, computation processing, and storage of the computation result value for the data corresponding to the relevant address in units of packets in each of the plurality of banks 31.

If the information processing method is utilized, it is possible to carry out computation processing in units of packets in the plurality of banks 31 of the storage device. As a result, a user of the information processing method can reduce the memory access relating to the computation processing of the vector including the indirect reference whose value is duplicated.

### (Other example embodiments)

Although the example embodiment has been described in detail above with reference to the drawings, the specific constitution is not limited to the constitution described above and various design changes and the like are possible.

Although the information processing device 100 in the example embodiment described above carries out computation processing in each bank 31, a buffer area in which each of the banks 31 can wait for may be provided in each of the banks 31 and packet computation processing may be carried out in the plurality of banks 31. In this case, the information processing device 100 can carry out the computation processing of the packet using another computation unit 312 without waiting for the computation processing of the computation unit 312 in each of the banks 31. In addition, it is possible to further improve performance.

Also, the computation unit 312 of each of the banks 31 may carry out packet computation processing using a single instruction multiple threads (SIMT) method or a single instruction multiple data (SIMD) method.

Furthermore, the information processing device 100 may include a direct memory unit (DMU) instead of the core 1. That is to say, the information processing device 100 may carry out packet computation processing using the plurality of banks 31 provided in the cache memory 3 connected to the DMU that is a unit which controls direct memory access (DMA).

In addition, although the computation unit 312 in the example embodiment described above is an adder, the computation unit 312 may be another computation unit. For example, when a multiplier is provided in addition to an adder and a list vector multiply (LVM) instruction is added, it is also possible to speed up multiplication by replacing the example embodiment described above with multiplication.

### (Basic constitution)

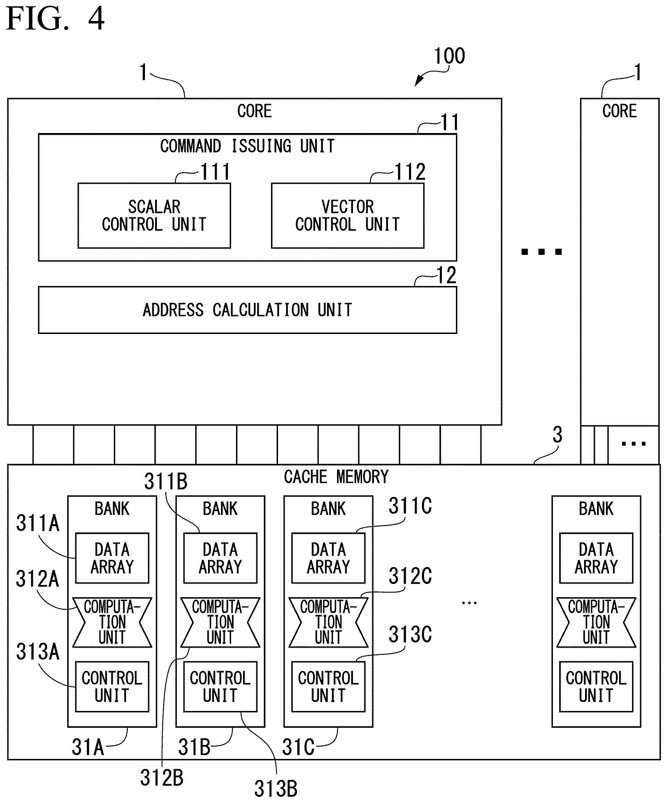

Fig. 4 is a schematic block diagram showing a basic constitution of the information processing device 100.

Although the constitution shown in Fig. 1 has been described as an example embodiment of the information processing device 100 in the example embodiment described above, the basic constitution of the information processing device 100 is as shown in Fig. 4.

That is to say, the constitution of the information processing device 100 relating to the basic constitution is a constitution in which the cross bar 13 is removed from the constitution of the information processing device 100 according to the first example embodiment.

The information processing device 100 relating to the basic constitution includes the storage device including the plurality of banks 31 that are storage regions for which independent reading/writing is possible and the processing device capable of accessing the plurality of banks in parallel. The processing device includes the generation means for generating, in units of loops in the loop control statement, a packet having the address in the index array and vector data elements stored therein. Each of the plurality of banks 31 atomically and simultaneously carries out a series of processes for carrying out computation processing and storage of the computation result value in units of packets.

The information processing device 100 atomically carries out computation processing and storage in units of packets in the plurality of banks 31 of the storage device. As a result, a user of the information processing device 100 can reduce the memory access relating to the computation processing of the vector including the indirect reference whose value is duplicated.

Priority is claimed on Japanese Patent Application No. 2020-047488, filed March 18, 2020, the content of which is incorporated herein by reference.

### Industrial Applicability

Each example aspect of the present invention may be applied to an information processing device and an information processing method.

### Reference Signs List

1 Core
3 Cache memory
11 Command issuing unit
12 Address calculation unit
13 Cross bar
31 Bank
111 Scalar control unit
112 Vector control unit
311 Data array
312 Computation unit
313 Control unit

## Claims

1. An information processing device, comprising:
a storage device including a plurality of banks which are storage regions for which independent reading/writing is possible; and
a processing device capable of accessing the plurality of banks in parallel,
wherein the processing device includes a generation means for generating, in units of loops in a loop control statement, a packet having an address in an index array and vector data elements stored therein, and each of the plurality of banks atomically and simultaneously carries out a series of processes for carrying out reading, computation processing, and storage of a computation result value for data corresponding to a relevant address in units of packets.

2. The information processing device according to claim 1, wherein the processing device includes a transmission means for identifying the bank which transmits a packet based on an address of the index array stored in the packet and transmitting the packet to a bank, and
the bank receives the transmitted packet and carries out the computation processing.

3. The information processing device according to claim 1 or 2, wherein the storage device is connected to the processing device in a wired or wireless manner.

4. The information processing device according to claim 1 or 2, wherein the storage device is provided inside the processing device.

5. The information processing device according to any one of claims 1 to 4, wherein the storage device is a cache memory.

6. An information processing method carried out using an information processing device which includes a storage device including a plurality of banks which are storage regions for which independent reading/writing is possible; and
a processing device capable of accessing the plurality of banks in parallel, the information processing method comprising:
a step of generating, in units of loops in a loop control statement, a packet having an address in an index array and vector data elements stored therein, and
a step of atomically and simultaneously carrying out, in each of the plurality of banks, a series of processes for carrying out reading, computation processing, and storage of a computation result value for data corresponding to a relevant address in units of packets.
